# EUROPEAN PATENT APPLICATION

(11) **EP 4 445 758 A1**
(43) Date of publication of application: **16.10.2024**
(21) Application number: 22915110.5
(22) Date of filing: 29.12.2022
(51) Int. Cl.: A24F 40/10, A24F 40/40, A24F 40/42, A24F 40/46, A24F 40/51, C04B 38/06, C04B 35/01

(54) **POROUS BODY, ATOMIZER AND ELECTRONIC ATOMIZATION DEVICE**

(30) Priority: 31.12.2021 CN 202111662654
(71) Applicant: Shenzhen First Union Technology Co., Ltd., Shenzhen, Guangdong 518000 (CN)
(72) Inventor: CHEN, Ming, Shenzhen, Guangdong 518000 (CN); LEI, Baoling, Shenzhen, Guangdong 518000 (CN); XU, Zhongli, Shenzhen, Guangdong 518000 (CN); LI, Yonghai, Shenzhen, Guangdong 518000 (CN)
(74) Representative: Jacob, Reuben Ellis
(86) International application number: PCT/CN2022/143616
(87) International publication number: WO 2023/125861

(57) **Abstract**

A porous body (30), an atomizer (100) and an electronic atomization device. The atomizer (100) comprises: a liquid storage cavity (12) for storing a liquid matrix, a porous body (30) in fluid communication with the liquid storage cavity (12) to receive the liquid matrix, and a heating element (40) bonded to the porous body (30) so as to heat at least part of the liquid matrix in the porous body (30) to generate an aerosol; the volume of micropores in the porous body (30) having internal diameters greater than 30 µm accounts for 40% or more of the volume of all micropores in the porous body (30). The atomizer (100) uses the porous body (30) which has micropores larger in diameter than common micropores and therefore produces aerosol particles with larger particle sizes by atomization. The particles easily adhere to taste bud receptors in the oral cavity and are beneficial to improving taste perception.

## Description

### CROSS-REFERENCE TO RELATED APPLICATIONS

This application claims priority to a prior application with Chinese Patent Application No. 202111662654.7, filed with the China National Intellectual Property Administration on December 31, 2021 and entitled "POROUS BODY, ATOMIZER AND ELECTRONIC ATOMIZATION DEVICE", which is incorporated herein by reference in its entirety.

### TECHNICAL FIELD

Embodiments of the present invention relate to the field of electronic atomization technologies, and in particular, to a porous body, an atomizer and an electronic atomization device.

### BACKGROUND

During use of tobacco products (for example, cigarettes and cigars), tobaccos are burnt to generate tobacco vapor. An attempt has been made to replace these tobacco-burning products by producing products that release compounds without burning.

An example of such products is a heating device, which releases compounds by heating tobacco rather than burning the material. For example, the material may be tobacco or other non-tobacco products, and these non-tobacco products may or may not contain nicotine. In another example, aerosol providing products exist, for example, the so-called electronic atomization devices. These devices usually contain liquid. The liquid is heated to be vaporized, thereby generating an inhalable aerosol. The liquid may include nicotine and/or aromatics and/or an aerosol generation substance (for example, glycerol). In addition to the aromatics in the liquid, the known electronic atomization device usually does not contain aromatics.

### SUMMARY

An embodiment of this application provides an atomizer, including:
a liquid storage cavity, configured to store a liquid substrate;
a porous body in fluid communication with the liquid storage cavity to receive the liquid substrate; and
a heating element, bonded to the porous body to heat at least part of the liquid substrate in the porous body to generate an aerosol.

A volume of micropores in the porous body having a pore size greater than 30 µm accounts for 40% or more of a volume of all micropores in the porous body.

In a preferred implementation, an average pore size of the micropores in the porous body is between 35 µm and 70 µm.

In a preferred implementation, the pore size of the micropores in the porous body is in a range of 1 µm to 300 µm.

In a preferred implementation, a volume of the micropores in the porous body having the pore size between 30 µm and 65 µm accounts for 50% or more of the volume of all of the micropores in the porous body.

In a preferred implementation, a volume of the micropores in the porous body having the pore size between 30 µm and 100 µm accounts for 60% or more of the volume of all of the micropores in the porous body.

In a preferred implementation, a volume of the micropores in the porous body having the pore size greater than 70 µm accounts for 15% or more of the volume of all of the micropores in the porous body.

In a preferred implementation, a volume of the micropores in the porous body having the pore size greater than 100 µm accounts for 2% to 10% of the volume of all of the micropores in the porous body.

In a preferred implementation, a volume of the micropores in the porous body having the pore size less than 30 µm accounts for 30% or fewer of the volume of all of the micropores in the porous body.

In a preferred implementation, a volume of the micropores in the porous body having the pore size between 10 µm and 30 µm accounts for 5% to 20% of the volume of all of the micropores in the porous body.

In a preferred implementation, a volume of the micropores in the porous body having the pore size less than 10 µm accounts for 5% or fewer of the volume of all of the micropores in the porous body.

In a preferred implementation, a porosity of the porous body is in a range of 35% to 75%.

In a preferred implementation, a water absorption rate of the porous body is in a range of 30% to 70%.

In a more preferred implementation, a number of substantially spherical micropores in a porous body 30/30a/30b accounts for not less than 30% of a number of all of the micropores. To be specific, during production, a proportion of substantially spherical particles in a porous former to all particles is not less than 30%, which is advantageous in promoting uniform transfer of the liquid substrate. The foregoing substantially spherical porous former or micropores are porous former particles or micropores with a degree of sphericity greater than 0.8. The term "degree of sphericity" is a parameter that represents a shape of an object such as the foregoing particle or pore, and may be calculated by using a ratio of a surface area of a sphere with the same volume to a surface area of the particle or the pore. A degree of sphericity of a standard sphere is equal to 1, a degree of sphericity of another object is less than 1, and the particle or pore closer to a sphere in shape has a degree of sphericity closer to 1.

In a preferred implementation, the porous body is rigid.

In a preferred implementation, the porous body is a porous ceramic body.

In a preferred implementation, the heating element is conductive traces printed or deposited on the porous body.

In a preferred implementation, the porous body is provided with a flat atomization surface, and the heating element is a heating element bonded to a plane on the atomization surface. An extension dimension of the heating element along a length direction of the atomization surface is greater than 75% of a length dimension of the atomization surface.

In a preferred implementation, the porous body further includes a liquid channel or a groove extending through the porous body along a length direction.

At least part of an inner surface of the liquid channel or the groove is configured as a liquid absorbing surface in fluid communication with the liquid storage cavity for absorbing the liquid substrate.

In a preferred implementation, the porous body is provided with a first surface and a second surface opposite to each other.

The first surface is configured as a liquid absorbing surface in fluid communication with the liquid storage cavity for absorbing the liquid substrate. The second surface is configured as an atomization surface, and the heating element is bonded to the second surface. A distance between the first surface and the second surface is between 1 mm and 5 mm.

Another embodiment of this application further provides an electronic atomization device, including an atomizer configured to atomize a liquid substrate to generate an aerosol, and a power supply mechanism configured to supply power to the atomizer. The atomizer includes the atomizer described above.

Still another embodiment of this application further provides a porous body, applied to an atomizer. A volume of micropores in the porous body having a pore size greater than 30 µm accounts for 40% or more of a volume of all micropores in the porous body.

The foregoing atomizer uses the porous body which has micropores with a larger pore size than common micropores and therefore generates aerosol particles with a larger particle size than an aerosol particle size by atomization. The particles easily adhere to taste bud receptors in an oral cavity and are beneficial to improving taste perception.

### BRIEF DESCRIPTION OF THE DRAWINGS

One or more embodiments are exemplarily described with reference to pictures in accompanying drawings corresponding to the embodiments, and the exemplary descriptions do not constitute a limitation on the embodiments. Elements in the accompanying drawings that have same reference numerals are represented as similar elements, and unless otherwise particularly stated, the figures in the accompanying drawings are not drawn to scale.
FIG. 1 is a schematic structural diagram of an electronic atomization device according to an embodiment.
FIG. 2 is a schematic cross-sectional view of an embodiment of an atomizer in FIG. 1.
FIG. 3 is a schematic structural diagram of a porous body in FIG. 2 from a perspective.
FIG. 4 is a schematic structural diagram of a porous body in FIG. 2 from another perspective.
FIG. 5 is a schematic structural diagram of a porous body according to another embodiment from a perspective.
FIG. 6 is a schematic cross-sectional view of another embodiment of an atomizer in FIG. 1.
FIG. 7 is a microtopographic map of a cross section of a porous body according to an embodiment.
FIG. 8 is a microtopographic map of a cross section of a porous body according to another embodiment.
FIG. 9 is a comparison diagram of aerosol particle sizes generated by atomizing a liquid substrate in one embodiment and a comparative example during implementation.
FIG. 10 is a comparison diagram of distribution of aerosol particle sizes generated by atomizing a liquid substrate in one embodiment and a comparative example during implementation.
FIG. 11 is a comparison diagram of distribution of aerosol particle sizes generated by atomizing a liquid substrate in another embodiment and a comparative example during implementation.

### DETAILED DESCRIPTION

For ease of understanding of this application, this application is described below in more detail with reference to accompanying drawings and specific implementations.

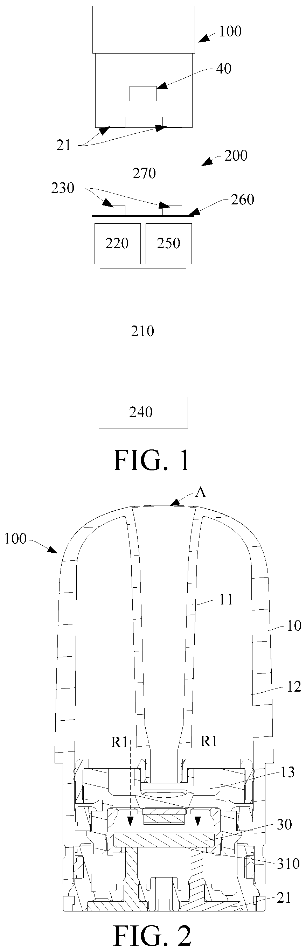

In an optional implementation solution, as shown in FIG. 1, a power supply mechanism 200 includes: a receiving cavity 270 arranged on an end along a length direction and configured to receive and accommodate at least part of an atomizer 100; and a first electrical contact 230, at least partially exposed from a surface of the receiving cavity 270 and configured to form an electrical connection with the atomizer 100 to supply power to the atomizer 100 when the at least part of the atomizer 100 is received and accommodated in the power supply mechanism 200.

According to a preferred implementation solution shown in FIG. 1, a second electrical contact 21 is arranged on an end portion of the atomizer 100 opposite to the power supply mechanism 200 along the length direction, so that the second electrical contact 21 abuts against the first electrical contact 230 by contact to conduct electricity when the at least part of the atomizer 100 is received in the receiving cavity 270.

A seal member 260 is arranged in the power supply mechanism 200, and at least part of an internal space of the power supply mechanism 200 is separated by the seal member 260 to form the receiving cavity 270. In the preferred implementation solution shown in FIG. 1, the seal member 260 is configured to extend along a cross-section direction of the power supply mechanism 200, and is preferably made of a flexible material such as silica gel, so as to prevent, from flowing to a component such as a controller 220 and a sensor 250 inside the power supply mechanism 200, the liquid substrate seeping from the atomizer 100 to the receiving cavity 270.

In the preferred implementation shown in FIG. 1, the power supply mechanism 200 further includes: a battery core 210 configured to supply power and facing away from the receiving cavity 270 along the length direction; and the controller 220 arranged between the battery core 210 and the receiving cavity 270, where the controller 220 operably guides a current between the battery core 210 and the first electrical contact 230.

The power supply mechanism 200 includes the sensor 250 configured to sense inhalation airflow generated during inhalation of the atomizer 100 by a user, and then the controller 220 controls, based on a detection signal of the sensor 250, the battery core 210 to output a current to the atomizer 100.

Further, in the preferred implementation shown in FIG. 1, a charging interface 240 is arranged on another end of the power supply mechanism 200 facing away from the receiving cavity 270, and is configured to supply power to the battery core 210.

Embodiments of FIG. 2 to FIG. 4 each show a schematic structural diagram of an embodiment of the atomizer 100 in FIG. 1, which includes a main housing 10, a porous body 30, and a heating element 40.

As shown in FIG. 2, the main housing 10 is substantially flat and cylindrical, and certainly, a hollow interior of the main housing is a configured to store an atomized liquid substrate and store another necessary functional device. A suction nozzle A configured to inhale an aerosol is arranged on an upper end of the main housing 10.

The interior of the main housing 10 is provided with a liquid storage cavity 12 configured to store the liquid substrate. In a specific implementation, a vapor-gas transmission pipe 11 along an axial direction is arranged inside the main housing 10, and the liquid storage cavity 12 configured to store the liquid substrate is formed in a space between an outer wall of the vapor-gas transmission pipe 11 and an inner wall of the main housing 10. An upper end of the vapor-gas transmission pipe 11 opposite to a proximal end 110 is in communication with the suction nozzle A.

The porous body 30 is configured to obtain the liquid substrate in the liquid storage cavity 12 through a liquid guide hole 13, and the liquid substrate is transferred as indicated by an arrow R1 in FIG. 2. The porous body 30 has a flat atomization surface 310. The heating element 40 that heats at least part of the liquid substrate absorbed by the porous body 30 to generate the aerosol is formed on the atomization surface 310.

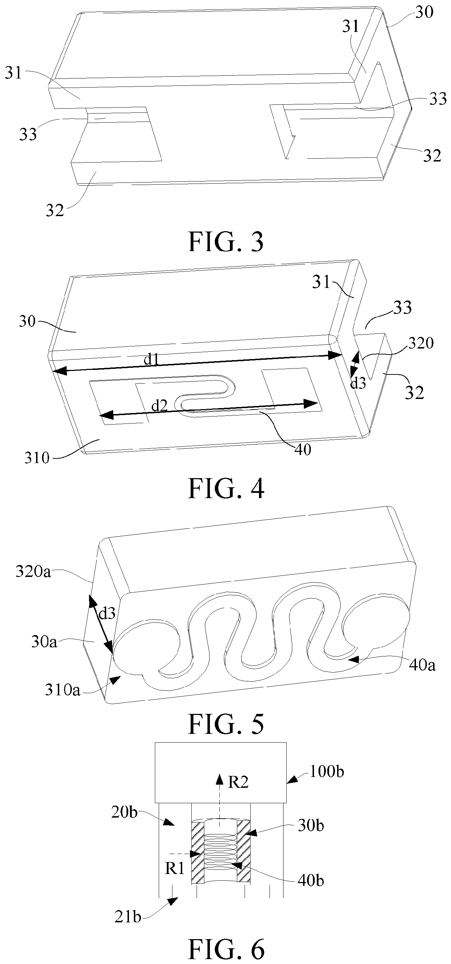

After assembly, two ends of the heating element 40 abut against the second electrical contact 21 to conduct electricity, and the heating element 40 heats at least part of the liquid substrate of the porous body 30 to generate the aerosol during energization. In an optional implementation, the porous body 30 includes flexible fibers, such as cotton fibers, non-woven fabrics, glass fiber ropes, or includes porous ceramics having a microporous structure, for example, a porous ceramic body in the shape shown in FIG. 3 and FIG. 4. A side of the porous body 30 facing away from the atomization surface 310 is in fluid communication with the liquid guide hole 13 to absorb the liquid substrate, and then the liquid substrate is transferred to the atomization surface 310 for heating and atomization.

Further, reference is specifically made to the implementations shown in FIG. 3 and FIG. 4. The porous body 30 is provided with a first side wall 31 and a second side wall 32 opposite to each other along a thickness direction, and a liquid channel 33 extending between the first side wall 31 and the second side wall 32. Two ends of the liquid channel 33 are in fluid communication with the liquid storage cavity 12 through the liquid guide hole 13 to receive the liquid substrate. Then the liquid substrate is absorbed into the porous body 30 through an inner surface of the liquid channel 33, and finally transferred to the atomization surface 310 for heating and atomization.

Alternatively, in still other variant implementations, the liquid channel 33 is in the form of a groove formed on a surface of the porous body 30 and extending through the porous body 30.

The porous body 30 is further provided with a flat surface 320. The surface 320 is arranged in parallel with the atomization surface 310. In addition, in FIG. 3 and FIG. 4, the surface 320 is adjacent to and defines the liquid channel 33, then the surface 320 is in fluid communication with the liquid storage cavity 12 after assembly, and then the surface 320 is constructed as a liquid absorbing surface that can be used for the liquid substrate to be immersed or absorbed into the porous body 30. In the implementation, a distance between the atomization surface 310 and the surface 320 is between 1 mm and 5 mm.

The heating element 40 may be bonded to the atomization surface 310 of the porous body 30 through printing, deposition, sintering, physical assembly, or the like. In some other variant implementations, the porous body 30 may have a plane or curved surface for supporting the heating element 40, and the heating element 40 is formed on the plane or the curved surface of the porous body 30 through mounting, printing, deposition, and the like.

In the implementation, the heating element 40 substantially covers an extension length of the atomization surface 310. Specifically, in dimensions of the atomization surface 310, a length d1 is 6.7 mm, and an extension length d2 of the heating element 40 is 5.22 mm. To be specific, the extension length d2 along the length direction of the atomization surface 310 in FIG. 4 is greater than 75% of an extension length d1 of the atomization surface 310.

A material of the heating element 40 may be a metallic material with an appropriate impedance, a metal alloy, graphite, carbon, conductive ceramics, or another composite material of a ceramic material and the metallic material. An appropriate metal or alloy material includes at least one of nickel, cobalt, zirconium, titanium, nickel alloy, cobalt alloy, zirconium alloy, titanium alloy, nickel-chromium alloy, nickel-iron alloy, iron-chromium alloy, iron-chromium-aluminum alloy, titanium alloy, iron-manganese-aluminum based alloy, or stainless steel. A metal or alloy material having a suitable resistance temperature coefficient such as a positive temperature coefficient or a negative temperature coefficient may be selected as a resistive material of the heating element 40. In this way, a heating circuit not only can be configured to generate heat, but also can be configured as a sensor for sensing a real-time temperature of an atomization assembly.

Alternatively, in some other variant implementations, the porous body 30 may have more regular or irregular shapes. Specifically, for example, FIG. 5 is a schematic diagram of a porous body 30a in still another embodiment. The porous body 30a is in the shape of a plate or a sheet. A side surface of the porous body along a thickness direction is configured as an atomization surface 310a. A heating element 40a is bonded to the atomization surface 310a to heat and atomize a liquid substrate to generate an aerosol for inhalation. A surface 320a of the porous body 30a facing away from the atomization surface 310a is in fluid communication with a liquid storage cavity 12 after assembly, and then is configured to absorb a liquid absorbing surface of the liquid substrate. The liquid absorbing surface may be provided with a structure such as a groove and a protrusion.

In the implementation, the heating element 40a substantially completely covers an extension length of the atomization surface 310a. To be specific, the extension length along a length direction of the atomization surface 310a in FIG. 5 is greater than 95% of the extension length of the atomization surface 310a. During use, the heating element 40a can have a wider heat radiation area and improve atomization efficiency.

FIG. 6 is a schematic structural diagram showing an atomizer 100b according to still another embodiment. A porous body 30b is configured in the shape of a hollow column extending in a longitudinal direction of an atomizer 100b, and a heating element 40b is formed in a columnar hollow of the porous body 30b. During use, as indicated by arrow R1, a liquid substrate in a liquid storage cavity 20b is absorbed along an outer surface of the porous body 30b in a radial direction, and then transferred to the heating element 40b on an inner surface to be heated and vaporized to generate an aerosol. The generated aerosol is outputted from the columnar hollow of the porous body 30b along the longitudinal direction of the atomizer 100b.

In some preferred implementations, the foregoing porous body 30/30a/30b is a rigid porous body, for example, one of a porous ceramic body, porous glass, a porous metal, and a porous composite material (such as a porous metal ceramic composite material).

In some implementations, micropores in the porous body 30/30a/30b have a pore size ranging from 1 µm to 300 µm.

In a more preferred implementation, an average pore size of the micropores in the porous body 30/30a/30b ranges from 35 µm to 70 µm.

In addition, in a further implementation, a volume of the micropores in the porous body 30/30a/30b having the pore size greater than 30 µm accounts for 40% or more of a volume of all of the micropores in the porous body 30/30a/30b. In the porous body 30/30a/30b having the arrangement of the pore size of the micropores, aerosol particles with a larger particle size than an aerosol particle size are generated by transfer and atomization of the liquid substrate. The particles easily adhere to taste bud receptors in an oral cavity and are beneficial to improving taste perception. More preferably, a volume of micropores having a pore size greater than 30 µm accounts for 50% or more of a volume of all micropores in the porous body 30/30a/30b. More preferably, a volume of the micropores having the pore size greater than 30 µm accounts for 60% or more of the volume of all of the micropores in the porous body 30/30a/30b. More preferably, a volume of the micropores having the pore size greater than 30 µm accounts for 70% or more of the volume of all of the micropores in the porous body 30/30a/30b.

In this way, the porous body 30/30a/30b having micropores with a relatively large pore size has greater liquid transfer efficiency than a porous body with a small pore size. Therefore, in the foregoing implementations, a spacing between the surface 320/320a and the atomization surface 310/310a is larger than that of the porous body with the small pore size. For example, a spacing d3 between the surface 320/320a and the atomization surface 310/310a in FIG. 4 and FIG. 5 is between 1 mm and 5 mm. For example, in a specific implementation, the spacing d3 between the surface 320/320a and the atomization surface 310/310a is greater than or equal to 3 mm.

In addition, in a further implementation, a volume of the micropores in the porous body 30/30a/30b having the pore size greater than 70 µm accounts for 5% or more of the volume of all of the micropores in the porous body 30/30a/30b. More preferably, a volume of the micropores in the porous body 30/30a/30b having the pore size greater than 70 µm accounts for 15% or more of the volume of all of the micropores in the porous body 30/30a/30b.

In addition, in a further implementation, a volume of the micropores in the porous body 30/30a/30b having the pore size greater than 100 µm accounts for 2% to 10% of the volume of all of the micropores in the porous body 30/30a/30b.

In addition, in a further implementation, a volume of the micropores in the porous body 30/30a/30b having the pore size between 30 µm and 65 µm accounts for 50% or more of the volume of all of the micropores in the porous body 30/30a/30b. More preferably, a volume of the micropores having the pore size between 30 µm and 65 µm accounts for 60% or more of the volume of all of the micropores in the porous body 30/30a/30b.

In addition, in a further implementation, a volume of the micropores in the porous body 30/30a/30b having the pore size between 30 µm and 100 µm accounts for 60% or more of the volume of all of the micropores in the porous body 30/30a/30b. More preferably, a volume of the micropores having the pore size between 30 µm and 100 µm accounts for 70% or more of the volume of all of the micropores in the porous body 30/30a/30b. More preferably, a volume of the micropores having the pore size between 30 µm and 100 µm accounts for 80% or more of the volume of all of the micropores in the porous body 30/30a/30b.

In addition, in a further implementation, a volume of the micropores in the porous body 30/30a/30b having the pore size less than 30 µm accounts for 30% or fewer of the volume of all of the micropores in the porous body 30/30a/30b. More preferably, a volume of the micropores in the porous body 30/30a/30b having the pore size less than 30 µm accounts for 20% or fewer of the volume of all of the micropores in the porous body 30/30a/30b.

In addition, in a further implementation, a volume of the micropores in the porous body 30/30a/30b having the pore size between 10 µm and 30 µm accounts for 5% to 20% of the volume of all of the micropores in the porous body 30/30a/30b. With the pore size of the micropores of 10 µm to 30 µm, aroma component particles with a smaller particle size than the aerosol particle size are generated by the transfer and the atomization of the liquid substrate. The aroma in the liquid substrate is fully released, which is beneficial to a sense of a smell/respiratory tract of a user.

In addition, in a further implementation, a volume of the micropores in the porous body 30/30a/30b having the pore size less than 10 µm accounts for 5% or fewer of the volume of all of the micropores in the porous body 30/30a/30b.

The foregoing porous body 30/30a/30b suitable for having micropores with a larger pore size and micropores with a smaller pore size is provided above. On the one hand, the micropores with the larger pore size facilitate adhesion of large aerosol particles as formed widely to taste bud receptors in an oral cavity, and on the other hand, the micropores with the smaller pore size facilitate a finer feeling of taste and aroma through formed aroma particles with smaller particles.

In addition, in a further implementation, a porosity of the porous body 30/30a/30b is in a range of 35% to 75%. The foregoing "porosity" is a term in materials science, which refers to a percentage of a pore volume in a porous material to a total volume of a material in a natural state. The "porosity" of the porous body 30/30a/30b in this embodiment is a percentage of the volume of all of the micropores in the porous body 30/30a/30b to the total volume of the porous body 30/30a/30b.

In some preferred implementations, a water absorption rate of the porous body 30/30a/30b is in a range of 30% to 70%. The foregoing "water absorption rate" is a term in materials science, which refers to a percentage of mass of water adsorbed by an object or a material under a normal atmospheric pressure to mass of the object or the material. The "water absorption rate" of the porous body 30/30a/30b in this embodiment is a percentage of mass of water adsorbed by the porous body 30/30a/30b under the normal atmospheric pressure to mass of the porous body 30/30a/30b.

In some preferred implementations, the pore size of the micropores in the porous body 30/30a/30b prepared above is formed by adjusting the particle size and the proportion of the porous former (for example, carbon powder, starch, and PMMA microspheres). For example, during preparation of the porous body 30/30a/30b made of a common ceramic material, a slurry is made by mixing a ceramic raw material (such as alumina, zirconia, and diatomite) with porous former powder and adding specific organic additives. Then an embryo is obtained by injection molding in a mold, and the embryo is sintered to obtain the porous body 30/30a/30b made of the ceramic material. During sintering at a high temperature, the porous former powder is burnt off, and the space originally occupied forms micropores in the porous body 30/30a/30b.

In a more preferred implementation, the porous former during preparation may include at least two or more particle shapes. For example, in a typical implementation, the particle shape of the porous former may include two or more of a substantially spherical shape, an ellipsoid shape, an elongated rod shape, a funnel shape, a coffee bean shape, a polygonal shape, and the like. Therefore, the pore shapes of the micropores formed in the porous body 30/30a/30b obtained by further preparation include two or more of the substantially spherical shape, the ellipsoid shape, the elongated rod shape, the funnel shape, the coffee bean shape, the polygonal shape, and the like.

In a more preferred implementation, a number of substantially spherical micropores in a porous body 30/30a/30b accounts for not less than 30% of a number of all of the micropores. To be specific, during production, a proportion of substantially spherical particles in the porous former to all particles is not less than 30%, which is advantageous in promoting uniform transfer of the liquid substrate. The foregoing substantially spherical porous former or micropores are porous former particles or micropores with a degree of sphericity greater than 0.8. The term "degree of sphericity" is a parameter that represents a shape of an object such as the foregoing particle or pore, and may be calculated by using a ratio of a surface area of a sphere with the same volume to a surface area of the particle or the pore. A degree of sphericity of a standard sphere is equal to 1, a degree of sphericity of another object is less than 1, and the particle or pore closer to a sphere in shape has a degree of sphericity closer to 1.

In a specific Embodiment 1, 70g of diatomaceous earth, 3g of alumina, 5g of clay, and 7g of high-temperature glass powder are used as ceramic powder, and the porous former with a volume of 45% of that of the ceramic powder is mixed and used as a porous ceramic raw material. Then paraffin wax is added and mixed, and then molded in a mold. After demolding, the porous body 30 is prepared by using a common debonding and sintering process.

In Embodiment 1, the porous former is a mixture of the carbon powder and the PMMA microspheres, and the distribution of the particle sizes of the porous former is shown in Table 1 below.

| | | | | | | | |
|---|---|---|---|---|---|---|---|
| Pore size range (µm) | <30.7 | <52.0 | <65.1 | <82.6 | <103.8 | <114.9 | <147.6 |
| Proportion | 21% | 60% | 70% | 86% | 92% | 95% | 97% |

A proportion of particles in the porous former with a pore size less than 30.7 µm in the porous former is 21%, and 70% of particle sizes of the particles in the porous former is substantially between 30 µm and 100 µm. In the embodiment, the average particle size approximately ranges from 40 µm to 50 µm.

In the porous body 30 prepared in Embodiment 1, the distribution of the micropores inside the porous body 30 measured through mercury porosimetry in GB/T21650.1-2008 is shown in Table 2 below.

| Mercury pressure (psia) | Pore size range (µm) | Proportion % of the volume of all micropores | Difference % from the proportion of the previous pore size range | Proportion % of pore sizes in each section |
|---|---|---|---|---|
| 0.509329855 | >355.101 | 0 | 0 | 4.871008635 |
| 0.599140048 | >301.8719 | 0.5813784 | 0.5813784 | |
| 0.697387636 | >259.34435 | 0.958488703 | 0.377110332 | |
| 0.796284258 | >227.1344 | 1.335598946 | 0.377110213 | |
| 0.897128046 | >201.6028125 | 1.744135141 | 0.408536226 | |
| 0.997566104 | >181.3048125 | 2.08981967 | 0.345684499 | |
| 1.242252111 | >145.5932625 | 3.095447063 | 1.005627394 | |
| 1.488885283 | >121.4758125 | 4.871008396 | 1.775561571 | |
| 1.781437635 | >101.5267313 | 7.542205811 | 2.671197176 | 70.0796628 |
| 1.994158745 | >90.6966625 | 9.097786903 | 1.555580854 | |
| 2.48093462 | >72.901375 | 21.62099075 | 12.5232029 | |
| 2.980204582 | >60.68829375 | 41.010746 | 19.38975334 | |
| 3.481421471 | >51.9510625 | 60.46334839 | 19.4526062 | |
| 3.980447769 | >45.4379875 | 69.56114197 | 9.097789764 | |
| 4.978013992 | >36.33246875 | 74.95066833 | 5.389532566 | |
| 5.976472378 | >30.26259063 | 77.00906372 | 2.058392525 | 6.112337589 |
| 6.473470688 | >27.93919063 | 77.95184326 | 0.94278115 | |
| 6.976148129 | >25.92598906 | 78.81604767 | 0.864206076 | |
| 7.474363327 | >24.19785313 | 79.61741638 | 0.80136627 | |
| 8.470225334 | >21.35286094 | 81.06301117 | 1.445591569 | |
| 9.465519905 | >19.10761875 | 82.43 | 1.367016554 | 8.264994144 |
| 10.46235561 | >17.28707656 | 83.60849762 | 1.178469539 | |
| 11.70842171 | >15.44730313 | 84.97553253 | 1.367034912 | |
| 12.95278263 | >13.96329688 | 86.27970123 | 1.304167509 | |
| 14.48758698 | >12.48403516 | 87.83528137 | 1.555581927 | |
| 15.97777081 | >11.31969766 | 89.32800293 | 1.492723703 | |
| 17.96908951 | >10.06525938 | 91.16641235 | 1.838411689 | 10.67199673 |
| 19.96535873 | >9.058867188 | 92.89483643 | 1.72842133 | |
| 22.46007813 | >8.052664844 | 94.7960968 | 1.901260734 | |
| 24.95716476 | >7.246958594 | 96.41452789 | 1.618430972 | |
| 27.45375633 | >6.587934375 | 97.7029953 | 1.288469076 | |
| 29.97274017 | >6.034267969 | 98.67719269 | 0.974196434 | |
| 32.46617126 | >5.570830469 | 99.30571747 | 0.628526926 | |
| 34.96007813 | >5.173429297 | 99.77709961 | 0.471376747 | |
| 37.94257355 | >4.766770313 | 99.79711914 | 0.020021667 | |
| 47.85193253 | >3.779649609 | 100 | 0.202881157 | |
| 52.93677139 | >3.416595703 | 100 | 0 | |
| 62.72470856 | >2.883449609 | 100 | 0 | |

According to the mercury injection test in Table 1 above, the proportion of the pore size of each section is calculated as shown in Table 3 below.

| Pore size range (µm) | Volume proportion |
|---|---|
| >100 µm | about 7% |
| 30 µm to 100 µm | about 70% |
| 20 µm to 30 µm | about 6% |
| 10 µm to 20 µm | about 8% |
| < 10 µm | about 10% |

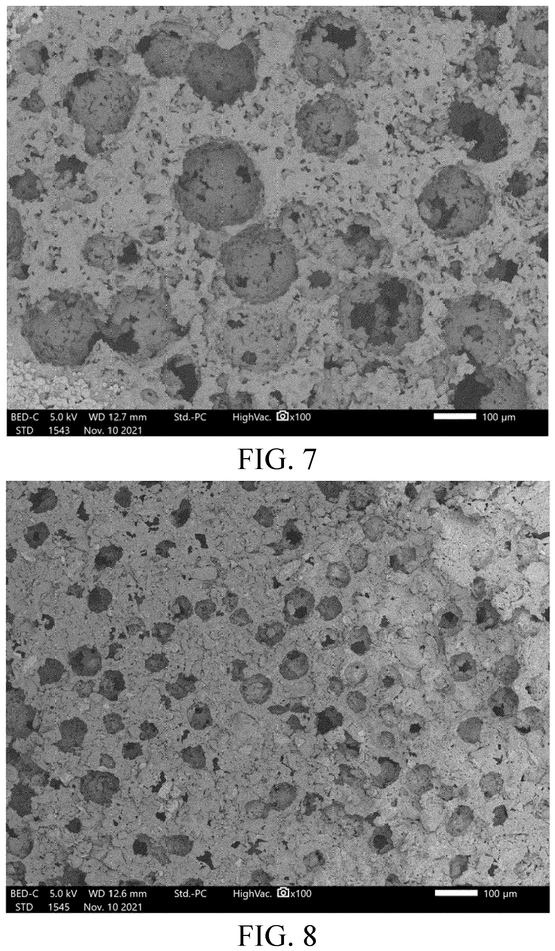

Further, FIG. 7 is a microtopographic map of a cross section of a porous body 30 of Embodiment 1 of Table 2 and Table 3 above. The pore size range of the porous body 30 of Embodiment 1 shown in FIG. 7, Table 2, and Table 3 is substantially between 4 µm and 300 µm. Micropores with pore sizes (diameters) larger than 30 µm accounts for about 77% of the volume of all micropores in the porous body 30. A volume of micropores with the pore size between 30 µm and 100 µm accounts for about 70% of the volume of all of the micropores in the porous body 30. Micropores with pore sizes (diameters) greater than 100 µm accounts for about 7% of the volume of all of the micropores in the porous body 30. In addition, in a further implementation, a volume of the micropores in the porous body 30 having the pore size less than 30 µm accounts for about 23% of the volume of all of the micropores in the porous body 30. Moreover, the water absorption rate of the porous body 30 prepared in Embodiment 1 above is 56% measured by using GB/T3299-1996.

In a specific Embodiment 2, 58g of diatomaceous earth, 5g of alumina, 5g of zirconia, and 12g of glass powder are used as ceramic powder, and 50% of a volume of the ceramic powder is added as the porous former to prepare the porous body 30. The distribution of the particle size of the carbon powder of the porous former is shown in Table 4 below.

| | | | | | | | |
|---|---|---|---|---|---|---|---|
| Pore size range (µm) | <23.6 | <33.8 | <40.4 | <60.5 | <100.5 | <120.6 | <220.3 |
| Proportion | 5% | 11% | 56% | 88% | 94% | 96% | 98% |

A proportion of particles in the porous former with a particle size less than 33.8 µm in the porous former is 11%, and 80% of particle sizes of the particles in the porous former is substantially between 30 µm and 100 µm. An average particle size of powder particles of the porous former is in a range of 33 µm to 40 µm.

In the porous body 30 prepared in Embodiment 1, the distribution of the micropores inside the porous body 30 measured through mercury porosimetry in GB/T21650.1-2008 is shown in Table 5 below.

| Mercury pressure (psia) | Pore size range (µm) | Cumulative micropore volume (ml/g) | Proportion % of the volume of all micropores | Difference % from the proportion of the previous pore size range | Proportion % of pore sizes in each section |
|---|---|---|---|---|---|
| 0.520086 | >347.75723 | 0 | 0.00 | 0.00% | 4.02% |
| 0.643536 | >281.0465 | 0.00235584 | 0.49 | 0.49% | |
| 0.763671 | >236.83435 | 0.00506197 | 1.06 | 0.57% | |
| 0.890752 | >203.04584 | 0.00836069 | 1.75 | 0.69% | |
| 0.960371 | >188.32681 | 0.00918281 | 1.93 | 0.17% | |
| 1.017912 | >177.68085 | 0.01071288 | 2.25 | 0.32% | |
| 1.245632 | >145.19816 | 0.01624591 | 3.41 | 1.16% | |
| 1.491823 | >121.23663 | 0.01918901 | 4.02 | 0.62% | |
| 1.996753 | >100.578813 | 0.02554648 | 5.36 | 1.33% | 84.53% |
| 2.492054 | >72.576088 | 0.0310792 | 6.52 | 1.16% | |
| 2.991539 | >60.458369 | 0.03873119 | 8.12 | 1.60% | |
| 3.491496 | >51.801153 | 0.04920872 | 10.32 | 2.20% | |
| 3.990586 | >45.32255 | 0.07887542 | 16.54 | 6.22% | |
| 4.491491 | >40.268038 | 0.19848263 | 41.62 | 25.08% | |
| 4.990028 | >36.244994 | 0.34163499 | 71.64 | 30.02% | |
| 5.989233 | >30.198113 | 0.42227578 | 88.55 | 16.91% | |
| 6.985834 | >25.890042 | 0.43204701 | 90.60 | 2.05% | 6.37% |
| 7.981803 | >22.659483 | 0.44464347 | 93.24 | 2.64% | |
| 8.978483 | >20.144108 | 0.4526487 | 94.92 | 1.68% | |
| 9.977768 | >18.126653 | 0.45759323 | 95.96 | 1.04% | 3.53% |
| 10.97508 | >16.479475 | 0.46077159 | 96.63 | 0.67% | |
| 11.97302 | >15.105923 | 0.46347931 | 97.19 | 0.57% | |
| 12.97104 | >13.943639 | 0.46500975 | 97.51 | 0.32% | |
| 13.9682 | >12.948239 | 0.46665785 | 97.86 | 0.35% | |
| 15.96084 | >11.331703 | 0.46842343 | 98.23 | 0.37% | |
| 16.95887 | >10.664837 | 0.46913022 | 98.38 | 0.15% | |
| 17.95507 | >10.073118 | 0.46948329 | 98.45 | 0.07% | |
| 18.95767 | >9.5403875 | 0.47030655 | 98.63 | 0.17% | 1.55% |
| 19.99311 | >9.0462945 | 0.47042516 | 98.65 | 0.02% | |
| 22.47932 | >8.0457742 | 0.47160208 | 98.90 | 0.25% | |
| 24.96845 | >7.2436828 | 0.47183797 | 98.95 | 0.05% | |
| 27.46714 | >6.5847242 | 0.4723084 | 99.05 | 0.10% | |
| 29.95967 | >6.0369012 | 0.47230864 | 99.05 | 0.00% | |
| 34.62855 | >5.2229602 | 0.4731766 | 99.23 | 0.18% | |
| 36.59629 | >4.9421277 | 0.47364897 | 99.33 | 0.10% | |
| 41.69368 | >4.3379121 | 0.47402862 | 99.41 | 0.08% | |
| 46.55803 | >3.884691 | 0.47433838 | 99.47 | 0.06% | |
| 51.41957 | >3.5174066 | 0.47465065 | 99.54 | 0.07% | |
| 56.02826 | >3.2280771 | 0.47485974 | 99.58 | 0.04% | |
| 71.49535 | >2.5297244 | 0.47507295 | 99.63 | 0.04% | |
| 86.61127 | >2.0882219 | 0.47533622 | 99.68 | 0.06% | |
| 112.2183 | >1.611712 | 0.47533622 | 99.68 | 0.00% | |
| 136.1467 | >1.328446 | 0.47544959 | 99.70 | 0.02% | |
| 172.1856 | >1.050399 | 0.47555855 | 99.73 | 0.02% | |
| 216.0891 | >0.8369859 | 0.47571424 | 99.76 | 0.03% | |
| 266.6249 | >0.6783446 | 0.47585782 | 99.79 | 0.03% | |
| 326.746 | >0.5535294 | 0.47589141 | 99.80 | 0.01% | |
| 416.5329 | >0.4342119 | 0.47589141 | 99.80 | 0.00% | |
| 516.9788 | >0.3498471 | 0.47599459 | 99.82 | 0.02% | |
| 637.3732 | >0.283764 | 0.47599459 | 99.82 | 0.00% | |
| 717.6485 | >0.2520225 | 0.47601631 | 99.82 | 0.00% | |
| 796.7003 | >0.2270158 | 0.47616568 | 99.85 | 0.03% | |
| 987.7159 | >0.1831129 | 0.47622019 | 99.87 | 0.01% | |
| 1091.781 | >0.1656592 | 0.47630876 | 99.88 | 0.02% | |
| 1196.822 | >0.1511199 | 0.47631702 | 99.89 | 0.00% | |
| 1347.275 | >0.134244 | 0.47686037 | 100.00 | 0.11% | |

According to the mercury injection test in Table 5 above, the proportion of the pore size of each section is calculated as shown in Table 6 below.

| Pore size range (µm) | Volume proportion |
|---|---|
| > 100 µm | about 5.36% |
| 30 µm to 100 µm | about 83.09% |
| 20 µm to 30 µm | about 6.37% |
| 10 µm to 20 µm | about 3.53% |
| < 10 µm | about 1.55% |

Further, FIG. 8 is a microtopographic map of a cross section of a porous body 30 of Embodiment 2 of Table 5 and Table 6 above. The average pore size of the micropores of the porous body 30 of Embodiment 2 is less than that of the porous body 30 of Embodiment 1 above, and has an average micropore size between 36 µm and 50 µm.

In a specific Embodiment 3, 55g of diatomaceous earth, 10g of alumina, 10g of clay, and 10g of glass powder are used as ceramic powder, and 60% of a volume of the ceramic powder is added as the porous former to prepare the porous body 30. The distribution of the particle size of the carbon powder of the porous former is shown in Table 7 below.

| | | | | | | | |
|---|---|---|---|---|---|---|---|
| Pore size range (µm) | <23.6 | <31.8 | <40.4 | <60.5 | <80.6 | <100.6 | <120.3 |
| Proportion | 31% | 56% | 64% | 78% | 82% | 96% | 98% |

A proportion of particles in the porous former with a particle size greater than 31.8 µm in the porous former is 44%, and the average particle size of the particles in the porous former is substantially between 31.8 µm and 40.4 µm.

In the porous body 30 prepared in Embodiment 3, the distribution of the micropores inside the porous body 30 measured through mercury porosimetry in GB/T 21650.1-2008 is shown in Table 8 below.

| Mercury pressure (psia) | Pore size range (µm) | Proportion % of the volume of all micropores | Difference % from the proportion of the previous pore size range | Proportion % of pore sizes in each section |
|---|---|---|---|---|
| 0.520086 | >347.75723 | 0 | 0 | 1.295688195 |
| 0.643536 | >281.0465 | 0 | 0 | |
| 0.763671 | >236.83435 | 0.360454608 | 0.360454608 | |
| 0.890752 | >203.04584 | 0.594262996 | 0.233808388 | |
| 0.960371 | >188.32681 | 0.828071346 | 0.23380835 | |
| 1.017912 | >177.68085 | 1.081363788 | 0.253292442 | |
| 1.245632 | >145.19816 | 1.295688195 | 0.214324407 | |
| 1.491823 | >121.23663 | 1.919177179 | 0.623488984 | 33.56809889 |
| 1.996753 | >100.578813 | 4.676167603 | 2.756990424 | |
| 2.492054 | >72.576088 | 25.42666252 | 20.75049492 | |
| 2.991539 | >60.458369 | 35.48727607 | 10.06061355 | |
| 3.491496 | >51.801153 | 36.52317566 | 1.03589959 | 11.94623871 |
| 3.990586 | >45.32255 | 37.59479858 | 1.07162292 | |
| 4.491491 | >40.268038 | 39.48727601 | 1.89247743 | |
| 4.990028 | >36.244994 | 43.12790802 | 3.64063201 | |
| 5.989233 | >30.198113 | 48.46941437 | 5.34150635 | |
| 6.985834 | >25.890042 | 68.84756164 | 20.37814727 | 17.70823975 |
| 7.981803 | >22.659483 | 72.86180176 | 4.01424012 | |
| 8.978483 | >20.144108 | 77.80858459 | 4.94678283 | |
| 9.977768 | >18.126653 | 77.94204407 | 0.13345948 | |
| 10.97508 | >16.479475 | 78.01368713 | 0.07164306 | |
| 11.97302 | >15.105923 | 79.44594788 | 1.43226075 | |
| 12.97104 | >13.943639 | 81.36698831 | 1.92104043 | |
| 13.9682 | >12.948239 | 82.17849762 | 0.81150931 | |
| 15.96084 | >11.331703 | 83.36703412 | 1.1885365 | |
| 16.95887 | >10.664837 | 84.30416801 | 0.93713389 | |
| 17.95507 | >10.073118 | 86.55580139 | 2.25163338 | |
| 18.95767 | >9.5403875 | 87.49272158 | 0.93692019 | 12.50727842 |
| 19.99311 | >9.0462945 | 89.83840942 | 2.34568784 | |
| 22.47932 | >8.0457742 | 91.72842407 | 1.89001465 | |
| 24.96845 | >7.2436828 | 92.90126037 | 1.1728363 | |
| 27.46714 | >6.5847242 | 94.68431091 | 1.78305054 | |
| 29.95967 | >6.0369012 | 96.88467407 | 2.20036316 | |
| 34.62855 | >5.2229602 | 97.74197388 | 0.85729981 | |
| 36.59629 | >4.9421277 | 98.96285278 | 1.2208789 | |
| 41.69368 | >4.3379121 | 99.02001951 | 0.05716673 | |
| 46.55803 | >3.884691 | 99.05241219 | 0.03239268 | |
| 51.41957 | >3.5174066 | 99.47138241 | 0.41897022 | |
| 56.02826 | >3.2280771 | 100 | 0.52861759 | |
| 71.49535 | >2.5297244 | 100 | 0 | |
| 86.61127 | >2.0882219 | 100 | 0 | |

According to the mercury injection test in Table 8 above, the proportion of the pore size of each section is calculated as shown in Table 9 below.

| Pore size range (µm) | Volume proportion |
|---|---|
| > 120 µm | about 1.91% |
| 60 µm to 120 µm | about 33.57% |
| 30 µm to 60 µm | about 12.98% |
| 10 µm to 30 µm | about 38.09% |
| < 10 µm | about 12.51% |

Further, the average pore size of the micropores of the porous body 30 of Embodiment 3 is smaller than that of the porous body 30 of Embodiment 2 above. The porous body of Embodiment 3 has an average pore size of the micropores greater than 30 µm. The micropores with pore sizes greater than 30 µm accounts for about 48.47% of the volume of all micropores.

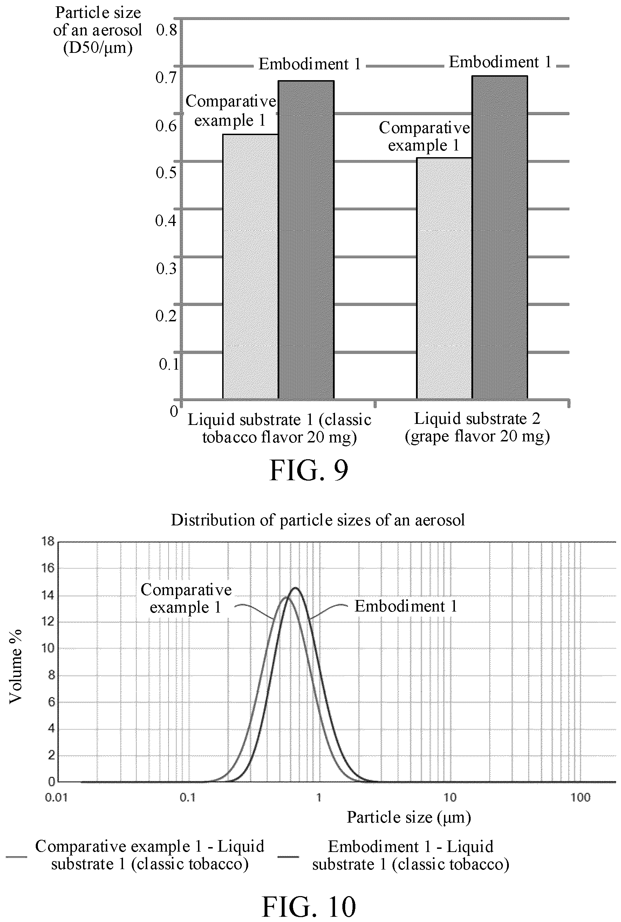

To verify the atomization particle size and taste effect of the aerosol generated by atomizing the liquid substrate of the porous body 30 with the majority of micropores of pore sizes greater than 30 µm and volume proportion of more than 40% in use, further, a porous body 30 with large pore sizes prepared in Embodiment 1 and a microporous ceramic body with small pore sizes that has micropores with the conventional average pore size commonly used in the art, i.e., in a range of 10 µm to 30 µm, and with pore sizes greater than 30 µm and accounting for less than 40% of the volume of all micropores are used as a comparative example 1. For particle size results of the aerosol generated by atomizing the liquid substrate at a constant power of 8W, reference is made to Table 10 and FIG. 9 to FIG. 11 below.

| Test result D50 of particle size of aerosol (D50 is a corresponding particle size when the cumulative particle size distribution in an aerosol particle reaches 50%, that is, an average particle size or a median particle size) | | | |
|---|---|---|---|
| | Liquid substrate 1 (classic tobacco flavor 20 mg) | Liquid substrate 2 (grape flavor 20 mg) | Taste buds and throat sensation |
| Comparative example 1 | 0.557 µm | 0.508 µm | Light and no throat hit |
| Embodiment 1 | 0.669 µm | 0.679 µm | Strong and with throat hit |

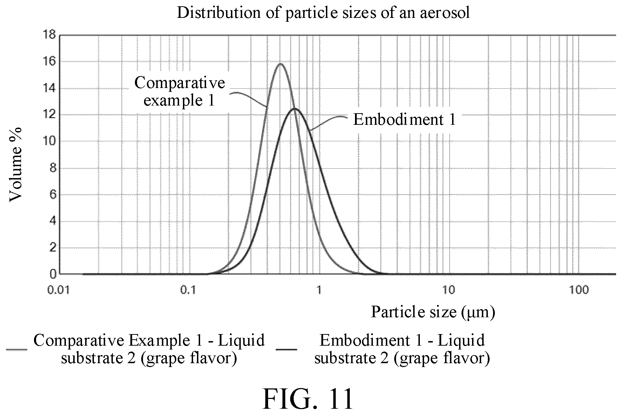

According to the distribution result of FIG. 10 and FIG. 11, in a comparative experiment with the classic tobacco-flavored liquid substrate 1, a mean value (an expected value) of the normally distributed aerosol particle sizes in the comparative example 1 is less than that of the porous body 30 of Embodiment 1. In a comparative experiment with the grape-flavored liquid substrate 2, a mean value (an expected value) of the normally distributed aerosol particle sizes in the comparative example 1 is less than that of the porous body 30 of Embodiment 1. Further, through comparison of the expected values of the particle size, the average particle size of the aerosol generated by the porous body 30 with a large pore size of Embodiment 1 is greater than the average particle size of the aerosol generated by the porous body with a small pore size in the comparative example 1. The aerosol particles generated by the porous body 30 of Embodiment 1 during inhalation easily adhere to taste bud receptors in an oral cavity and are beneficial to improving taste perception.

In addition, it is seen from the aerosol particle tests of the comparative experiment of the grape-flavored liquid substrate shown in FIG. 11 that, the proportion of the particle volume corresponding to the expected value of a normal distribution curve of the aerosol particles in the comparative example 1 is higher and about 16%. The normal distribution curve has a high narrow shape, which apparently indicates that particle sizes are centralized. Specifically, the particle size of 80% of the aerosol particles is between 0.4 µm and 1.1 µm. However, compared with the normal distribution curve of the aerosol particles in the embodiment, the particle volume proportion corresponding to the expected value is less than that of the comparative example 1 and is about 12%. The normal distribution curve has a low wide shape, which apparently indicates that particle sizes are dispersed. Specifically, the particle size of 80% of the aerosol particles is between 0.6 µm and 1.4 µm. Further, in use of the porous body 30 of Embodiment 1, the generated aerosol particles adhere to the taste bud receptors in the oral cavity more widely.

It is to be noted that, the specification and the accompanying drawings of this application provide the preferred embodiments of this application, but are not limited to the embodiments described in this specification. Further, a person of ordinary skill in the art may make improvements or modifications according to the foregoing descriptions, and all of the improvements and modifications shall fall within the protection scope of the appended claims of this application.

## Claims

1. An atomizer, comprising:
a liquid storage cavity, configured to store a liquid substrate;
a porous body in fluid communication with the liquid storage cavity to receive the liquid substrate; and
a heating element, bonded to the porous body to heat at least part of the liquid substrate in the porous body to generate an aerosol, wherein
a volume of micropores in the porous body having a pore size greater than 30 µm accounts for 40% or more of a volume of all micropores in the porous body.

2. The atomizer according to claim 1, wherein an average pore size of the micropores in the porous body is between 35 µm and 70 µm.

3. The atomizer according to claim 1 or 2, wherein the pore size of the micropores in the porous body is in a range of 1 µm to 300 µm.

4. The atomizer according to claim 1 or 2, wherein a volume of the micropores in the porous body having the pore size between 30 µm and 65 µm accounts for 50% or more of the volume of all of the micropores in the porous body.

5. The atomizer according to claim 1 or 2, wherein a volume of the micropores in the porous body having the pore size between 30 µm and 100 µm accounts for 60% or more of the volume of all of the micropores in the porous body.

6. The atomizer according to claim 1 or 2, wherein a volume of the micropores in the porous body having the pore size greater than 70 µm accounts for 15% or more of the volume of all of the micropores in the porous body.

7. The atomizer according to claim 1 or 2, wherein a volume of the micropores in the porous body having the pore size greater than 100 µm accounts for 2% to 10% of the volume of all of the micropores in the porous body.

8. The atomizer according to claim 1 or 2, wherein a volume of the micropores in the porous body having the pore size less than 30 µm accounts for 30% or fewer of the volume of all of the micropores in the porous body.

9. The atomizer according to claim 1 or 2, wherein a volume of the micropores in the porous body having the pore size between 10 µm and 30 µm accounts for 5% to 20% of the volume of all of the micropores in the porous body.

10. The atomizer according to claim 1 or 2, wherein a volume of the micropores in the porous body having the pore size less than 10 µm accounts for 5% or fewer of the volume of all of the micropores in the porous body.

11. The atomizer according to claim 1 or 2, wherein a porosity of the porous body is in a range of 35% to 75%.

12. The atomizer according to claim 1 or 2, wherein a water absorption rate of the porous body is in a range of 30% to 70%.

13. The atomizer according to claim 1 or 2, wherein a proportion of substantially spherical micropores in the porous body to all of the micropores is not less than 30%.

14. The atomizer according to claim 1 or 2, wherein the porous body is rigid.

15. The atomizer according to claim 1 or 2, wherein the porous body is a porous ceramic body.

16. The atomizer according to claim 1 or 2, wherein the heating element is conductive traces printed or deposited on the porous body.

17. The atomizer according to claim 1 or 2, wherein the porous body is provided with a flat atomization surface, and the heating element is a heating element bonded to a plane on the atomization surface; and an extension dimension of the heating element along a length direction of the atomization surface is greater than 75% of a length dimension of the atomization surface.

18. The atomizer according to claim 1 or 2, wherein the porous body further comprises a liquid channel extending through the porous body along a length direction; and
at least part of an inner surface of the liquid channel is configured as a liquid absorbing surface in fluid communication with the liquid storage cavity for absorbing the liquid substrate.

19. The atomizer according to claim 1 or 2, wherein the porous body is provided with a first surface and a second surface opposite to each other; and
the first surface is configured as a liquid absorbing surface in fluid communication with the liquid storage cavity for absorbing the liquid substrate, the second surface is configured as an atomization surface, the heating element is bonded to the second surface, and a distance between the first surface and the second surface is between 1 mm and 5 mm.

20. An electronic atomization device, comprising an atomizer configured to atomize a liquid substrate to generate an aerosol, and a power supply mechanism configured to supply power to the atomizer, wherein the atomizer comprises the atomizer according to any of claims 1 to 19.

21. A porous body, applied to an atomizer, wherein a volume of micropores in the porous body having a pore size greater than 30 µm accounts for 40% or more of a volume of all micropores in the porous body.
